# EUROPÄISCHE PATENTSCHRIFT

(11) **EP 1 932 724 B1**
(45) Veröffentlichungstag und Bekanntmachung des Hinweises auf die Patenterteilung: **28.10.2009**
(21) Anmeldenummer: 07400030.8
(22) Anmeldetag: 12.12.2007
(51) Int. Cl.: B60R 7/04

(54) **Kraftfahrzeug, insbesondere Personenkraftwagen mit verfahrbarem Fahrzeugsitz und dort angeordnetem Behältnis zur Aufnahme von Gegenständen**
Motor vehicle, in particular passenger car with adjustable car seat and affixed container for holding objects
Véhicule automobile, en particulier véhicules de transport de personnes doté d'un siège de véhicule déplaçable et récipient agencé à cet endroit pour la réception d'objets

(30) Priorität: 12.12.2006 DE 102006058477
(43) Veröffentlichungstag der Anmeldung: 18.06.2008
(73) Patentinhaber: GM Global Technology Operations, Inc., Detroit, MI 48265-3000 (US)
(72) Erfinder: Stepan, Sven, 64521 Gross-Gerau (DE)
(74) Vertreter: Strauss, Peter

(56) Entgegenhaltungen:
- DE-U1- 29 922 249
- FR-A- 2 613 299
- FR-A- 2 710 297
- GB-A- 2 201 088

## Beschreibung

Die Erfindung betrifft ein Kraftfahrzeug, insbesondere Personenkraftwagen, mit einem verfahrbaren Fahrzeugsitz und einem im Bereich dieses Sitzes angeordneten Behältnis zur Aufnahme von Gegenständen.

Ein Kraftfahrzeug nach dem Oberbegriff des Anspruchs 1 ist aus der GB 2201088 bekannt.

Bei Kraftfahrzeugen, insbesondere Personenkraftwagen, sind Fahrzeugsitze, insbesondere die im Bereich der vorderen Sitzreihe angeordneten Fahrzeugsitze üblicherweise verfahrbar. Hierzu ist der jeweilige Fahrzeugsitz in zwei Längsschienen verfahrbar, wobei dieser Sitz in Sitzträgern gelagert ist, die mit dem Fahrzeugboden verbunden sind.

Aus der Praxis ist es zudem bekannt, im vorderen Bereich des Sitzes ein Behältnis zur Aufnahme von Gegenständen vorzusehen. Dieses Behältnis ist mittels einer Klappe verschließbar, so dass bei geöffnetem Behältnis ein von vorne zugängliches Staufach unterhalb der Sitzfläche des Sitzes gebildet ist. Ein solches Staufach weist ein relativ geringes Aufnahmevolumen auf. Dies gilt insbesondere dann, wenn der Sitz mit einer Höhenverstellung versehen ist und in der nach unten verstellten Position des Sitzes nur wenig Platz für Stauvolumen verbleibt, das die räumliche Vorgabe für das Staufach bildet.

In der DE 100 47 739 A1 ist ein Fahrzeugsitz beschrieben, vor dem ein Behälter zur Aufnahme von Gegenständen zwischen einer dem Sitz nahen und einer dem Sitz fernen Stellung verschiebbar gelagert ist. Verschoben werden kann der Behälter mittels am Sitz befestigter Führungsschienen. Funktionell bildet dieser Behälter auf Grund seiner äußeren Gestaltung und seiner Verfahrbarkeit eine verfahrbare Unterschenkelstütze. Der Behälter weist einen im Wesentlichen prismatischen Querschnitt mit einer auf dem Fahrzeugboden aufliegenden Bodenwand auf und ist um eine im Bereich der Vorderkante der Bodenwand angeordnete Schwenkachse zwischen einer Außerbetriebstellung und einer Betriebstellung der Unterschenkelstütze schwenkbar. Der im Behälter gebildete Stauraum ist mittels eines verschwenkbar im Behältergehäuse gelagerten Deckels verschließbar.

Aufgabe der vorliegenden Erfindung ist es, ein Kraftfahrzeug, insbesondere ein Personenkraftwagen, so weiter zu bilden, dass bei konstruktiv sehr einfacher Gestaltung ein großer gut zugänglicher Stauraum im vorderen Bereich des Sitzes gebildet ist, unabhängig von der Position des längsverschieblichen Sitzes.

Gelöst wird diese Aufgabe durch ein Kraftfahrzeug gemäß Anspruch 1.

Somit ist bei dem erfindungsgemäßen Kraftfahrzeug das Behältnis unabhängig vom Sitz gelagert, wobei der Sitz in den Längsschienen verfahrbar ist und das Behältnis schwenkbar im vorderen Bereich des Sitzes quer zur Verfahrrichtung des Sitzes schwenkbar in den Sitzquerträgern gelagert ist. Das Behältnis ist über die Mittel zum Schwenken des Behältnisses mit dem Sitz verbunden. Hiermit lässt sich erreichen, dass das Behältnis in einer vorderen Stellung des Sitzes nach vorne gekippt ist und in einer hinteren Stellung des Sitzes nach hinten gekippt ist. In der jeweiligen Stellung des Sitzes, auch in Zwischenstellungen des Sitzes, ist das Behältnis somit von vorn frei zugänglich. Das Behältnis befindet sich insbesondere unterhalb des Sitzes, mit einem Bereich, der von der Vorderseite des Sitzes frei zugänglich ist. Bei dem Sitz handelt es sich vorzugsweise um einen Vordersitz des PKWs, insbesondere den Fahrersitz oder den Beifahrersitz.

Es wird als besonders zweckmäßig angesehen, wenn das Behältnis ein Staufach und ein Gehäuse zum Verschließen des Staufachs aufweist. Das Staufach dient insbesondere dem Zweck, die Gegenstände aufnehmen zu können, während dem Gehäuse des Behältnisses insbesondere der Zweck zukommt, das Staufach zu verschließen, so dass im Staufach aufgenommene Gegenstände, insbesondere bei einem Bremsmanöver, sicher im Behältnis verbleiben. Andererseits hat diese Ausbildung des Behältnisses den Vorteil, dass der Inhalt des Behältnisses von außen nicht frei einsehbar ist.

Eine baulich besonders einfache Gestaltung des Behältnisses lässt sich erzielen, wenn sowohl das Staufach als auch das Gehäuse um dieselbe Achse schwenkbar in den Sitzträgern gelagert sind. Vorzugsweise sind zudem Mittel vorgesehen, die die Schwenkbewegung des Staufachs und/oder des Gehäuses relativ zu den Sitzträgern begrenzen. Somit ist einerseits die Schwenkbewegung des Gehäuses relativ zum Staufach begrenzt, zwischen einer die Öffnung des Staufachs vollständig freigebenden und einer die Öffnung des Staufachs völlig verschließenden Stellung des Gehäuses. Andererseits erfolgt die Begrenzung der Schwenkbewegung des Staufachs zwischen einer nach hinten geschwenkten Endstellung bei vollständig nach hinten verfahrenem Sitz und einer vorderen Schwenkstellung bei vollständig nach vorne verfahrenem Sitz. Diese Mittel zum Begrenzen der Schwenkbewegung können auf unterschiedliche Art und Weise gestaltet sein. Es wird unter dem Aspekt der Herstellung des Behältnisses als vorteilhaft angesehen, wenn die Mittel zum Begrenzen der Schwenkbewegung sich als über den maximalen Schwenkwinkel erstreckende Bogenführung und als mit dieser zusammenwirkende Komplementärteile ausgebildet sind. Es handelt sich beispielsweise bei den Mitteln um einen Zapfen, der in einem konzentrisch zur Schwenkachse des Behälters angeordneten Schlitz zwischen den Endbereichen des Schlitzes bewegbar ist oder um ein drehbar gelagertes Zahnrad, das in einer konzentrisch zur Schwenkachse des Behältnisses angeordneten Zahnradführung gelagert ist, wobei dieser Zahnradführung zudem oder alleine die Aufgabe zukommt, eine Synchronisation der Schwenkbewegung des Behälters auf beiden Seiten des Behälters sicherzustellen.

Es wird ferner als vorteilhaft angesehen, wenn Federmittel zum Überführen des Staufachs in dessen vom Gehäuse geschlossene Stellung und/oder zum Überführen des Behältnisses in Richtung dessen Ausgangstellung bei vollständig zurückgefahrenem Sitz vorgesehen sind. Die Anordnung solcher Federmittel ist dann von besonderem Vorteil, wenn das Behältnis in der hintersten Position des Sitzes aufrecht stehend und in seiner vordersten Position des Sitzes nach vorne gekippt angeordnet ist. Die Federmittel unterstützen somit einerseits das Verfahren des Staufachs relativ zum Gehäuse zum Verschließen des Behältnisses, andererseits das Überführen des Behältnisses in die aufrecht stehende Position.

Die Mittel zum Schwenken des Behältnisses, die am Behältnis und am Sitz angreifen, können auf unterschiedliche Art und Weise gestaltet sein. Es wird als besonders vorteilhaft angesehen, wenn diese Mittel einen Verbindungshebel aufweisen, der mit einem Ende schwenkbar im Sitz und dem anderen Ende schwenkbar im Behältnis, insbesondere schwenkbar im Gehäuse des Behältnisses, gelagert ist. Über den Verbindungshebel werden beim Vorfahren des Sitzes Schubkräfte in das Behältnis eingeleitet und beim Zurückfahren des Sitzes Zugkräfte in den Sitz eingeleitet. Diese führen grundsätzlich zum Schwenken des Behältnisses beim Vorfahren und Zurückfahren des Sitzes. Gemäß einer bevorzugten Weiterbildung ist vorgesehen, dass der Verbindungshebel schwenkbar und verschiebbar im Behältnis gelagert ist. In diesem Fall werden nur dann Kippkräfte auf das Behältnis mittels des Verbindungshebels eingeleitet, wenn sich dieser in den Endpositionen der Verschiebeführung für den Verbindungshebel befindet. Insbesondere das Überführen des Behältnisses in die vollständig nach vorne gekippte Position kann dadurch erreicht werden, dass der Verbindungshebel das Behältnis nicht nur im Bereich seines Schwenklagers im Behältnis dieses kontaktiert, sondern der Verbindungshebel im Abstand zu diesem Schwenklager am Behältnis anliegt und hierdurch das Behältnis nach vorne schwenkt.

Der Verbindungshebel ist vorzugsweise mit seinem einen Ende schwenkbar in einer Querstrebe des Sitzes, insbesondere der Querstrebe des Sitzlängsverstellers gelagert.

Weitere Merkmale der Erfindung ergeben sich aus den Unteransprüchen, der nachfolgenden Figurenbeschreibung und den Figuren selbst, wobei bemerkt wird, dass alle Einzelmerkmale und Kombinationen von Einzelmerkmalen erfindungswesentlich sind.

In der Zeichnung ist die Erfindung anhand einer bevorzugten Ausführungsform erläutert. Es stellt dar:
- Figur 1: eine Seitenansicht des Fahrzeuges im Bereich der Sitzlängsschienen und des Sitzrahmenteils des Vordersitzes, in der vollständig zurückgefahrenen Stellung des Sitzes,
- Figur 2: eine Seitenansicht des Fahrzeuges im Bereich des Sitzrahmenteiles des Vordersitzes, in seiner teilweise zurückgefahrenen Stellung des Sitzes, sowie im Bereich des in Aufrecht stehender Position befindlichen, geschlossenen Behältnisses,
- Figur 3: eine Darstellung gemäß Figur 2, bei geöffnetem Behältnis,
- Figur 4: das in Figur 2 gezeigte Behältnis und die Verbindung von Behältnis und Sitzrahmenteil sowie Lagerung des Behältnisses in den Sitzquerträgern, in einer räumlichen Ansicht, schräg von vorne gesehen,
- Figur 5: die in Figur 4 gezeigte Anordnung, schräg von hinten gesehen,
- Figur 6: die Anordnung gemäß Figur 4, bei geöffnetem Behältnis,
- Figur 7: eine Seitenansicht gemäß Figur 2 bei teilweise vorgefahrenem Sitz und in eine Zwischenstellung gekipptem Behältnis, bei geschlossenem Behältnis,
- Figur 8: das in Figur 7 gezeigte Behältnis und die Verbindung von Behältnis und Sitzrahmenteil sowie Lagerung des Behältnisses in den Sitzquerträgern, in einer räumlichen Ansicht, schräg von vorne gesehen,
- Figur 9: die in Figur 8 gezeigte Anordnung, schräg von hinten gesehen,
- Figur 10: eine Seitenansicht gemäß der Figuren 2 und 7, bei vollständig vorgefahrenem Sitz und vollständig nach vorne gekipptem Behältnis, in geschlossenem Zustand des Behältnisses,
- Figur 11: eine Darstellung gemäß Figur 10 bei geöffnetem Behältnis,
- Figur 12: das in Figur 10 gezeigte Behältnis und die Verbindung von Behältnis und Sitzrahmenteil sowie Lagerung des Behältnisses in den Sitzquerträgern, in einer räumlichen Ansicht schräg von vorne gesehen,
- Figur 13: die in Figur 12 gezeigte Anordnung schräg von hinten gesehen,
- Figur 14: die Anordnung gemäß Figur 12 bei geöffnetem Behältnis,
- Figur 15: das Staufach, veranschaulicht in einer räumlichen Darstellung, schräg von vorne gesehen.

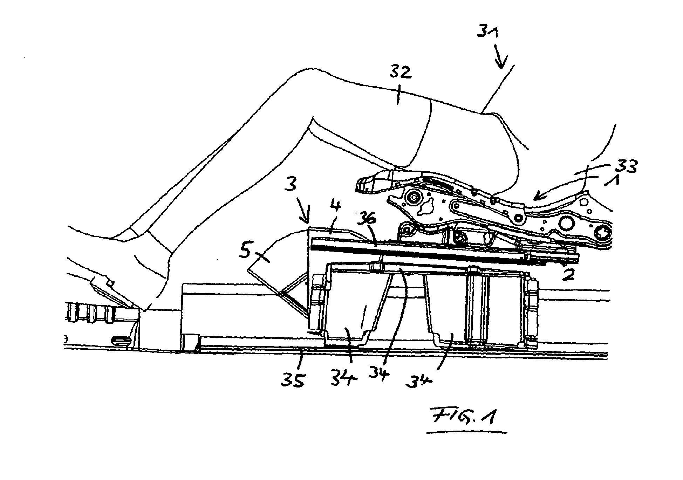

Figur 1 zeigt betreffend den Vordersitz des Personenkraftwagens nur dessen Sitzrahmenteil 1, das auf seiner Unterseite zwei parallel zueinander angeordnete Längsschienen 2 aufweist, die in Längsschienen 36 geführt sind, so dass der Vordersitz nach vorne und hinten verschoben werden kann. Auf Grund der Darstellung der Figur 1 ist nur die eine der beiden seitlichen Längsschienen 2 bzw. 36 zu sehen. Das gezeigte Sitzrahmenteil 1 verdeutlicht somit den Bereich, auf dem der Fahrzeuginsasse 31 mit seinem Oberschenkel 32 aufliegt und seinem Gesäß 33 sitzt. Bei dem fertigen Sitz umschließt ein Polsterteil das Sitzrahmenteil 1. Die Längsschienen 36 sind in zwei Sitzträgern 34 gelagert, die, in Längsrichtung des Fahrzeugs orientiert, mit dem Boden bzw. der Bodenplatte 35 des Fahrzeuges befestigt sind. Aufgrund der Darstellung der Figur 1 ist nur ein Sitzträger 34 zu sehen. - Die vorgenannte Anordnung ist aus dem Stand der Technik hinlänglich bekannt.

Figur 1 zeigt den Sitz, d. h. das Sitzrahmenteil 1 in seiner vollständig zurückgefahrenen Stellung. In dieser befindet sich unterhalb des Sitzrahmenteiles 1 vor diesem ein aufrecht stehendes Behältnis 3. Dieses besteht aus einem Gehäuse 4 und einem schwenkbar im Gehäuse 4 gelagerten Staufach 5, das in Figur 1 in nach vorne heraus geschwenkter Stellung dargestellt ist, womit das Behältnis 3 geöffnet ist.

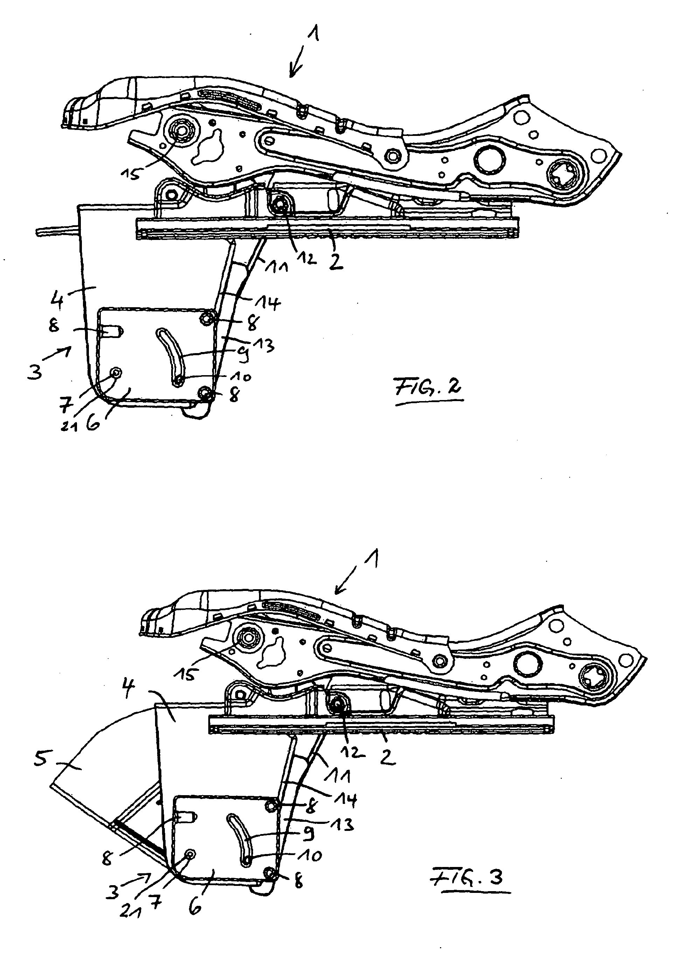

Figur 2 zeigt das Sitzrahmenteil 1 in seiner teilweise zurückgefahrenen Stellung. Auch in dieser Stellung nimmt das Behältnis 3 dieselbe Position ein, wie zur Figur 1 für die teilweise zurückgefahrenen Stellung des Sitzrahmenteils 1 dargestellt. Das Behältnis befindet sich somit unterhalb des Sitzrahmenteils 1 in dessen vorderen Bereich aufrecht stehend.

Die beiden Längsschienen 2 sind im Bereich der seitlichen Begrenzungen des Sitzrahmenteils 1 angeordnet und es ist das Behältnis 3 mit geringem seitlichen Abstand zwischen den beiden Längsschienen 2 positioniert. Demzufolge nimmt das Behältnis 3 nahezu die Gesamtbreite des Rahmenteils 1 und damit des Sitzes ein.

Das Gehäuse 4 des Behältnisses 3 ist auf den beiden Seiten in Trägerplatten 6 um die Achse 7 schwenkbar gelagert. Befestigt sind die beiden Trägerplatten 6, von denen nur die eine veranschaulicht ist, im Bereich dreier Befestigungspunkte 8 an den Sitzträgern, und zwar seitlich am jeweiligen Sitzträger 34 in dessen vorderem Bereich. Das Behältnis 3 ist somit stationär, aber kippbar in den Sitzträgern 34 bzw. den mit den Sitzträgern 34 verbundenen Trägerplatten 6 gelagert.

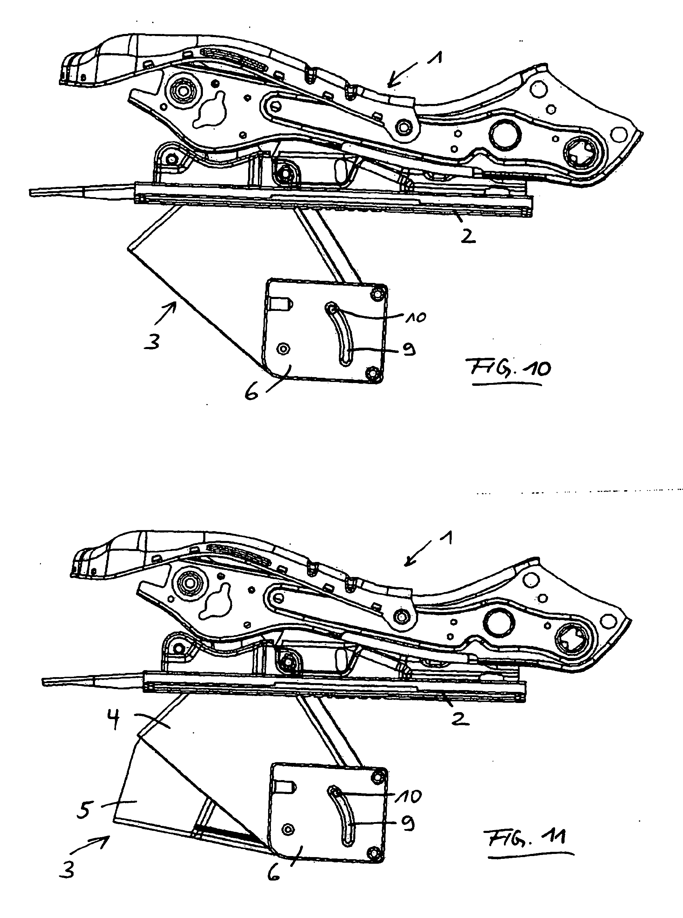

Die jeweilige Trägerplatte 6 ist konzentrisch zur Achse 7 mit einer Führungsnut 9 versehen, die sich über einen Teilkreis erstreckt. In die Führungsnut 9 greift ein Führungsstift 10 ein, der mit dem Gehäuse 4 verbunden ist. In der aufrechten Stellung des Gehäuses 4, die der vollständig zurückgeschobenen Stellung des Sitzrahmenteils 1 entspricht, gemäß der Darstellung in der Figur 2, ist der Führungsstift 10 an dem einen Ende der Führungsnut 9 platziert. In der anderen Endstellung des Gehäuses 4, die der Position des Sitzrahmenteils 1 bei vollständig nach vorne geschobenem Sitz entspricht - gemäß Figur 10 - befindet sich der Führungsstift 10 am anderen Ende der Führungsnut 9. Durch das Zusammenwirken von Führungsnut 9 und Führungsstift 10 kann das Gehäuse 4 und damit das Behältnis 3 nicht über die genannten Endstellungen gekippt werden.

Bewegt wird das Gehäuse 4 und damit das Behältnis 3 bei einer Verfahrbewegung des Sitzrahmenteils 1 und der mit diesen verbunden Längsschienen 2 in deren Schienenrichtung mittels eines Verbindungshebels 11, der im Bereich seines oberen Endes in einer Querstrebe 12 des Sitzlängsverstellers des Sitzes schwenkbar gelagert ist und im Bereich seines unteren Endes in einer Führungsschiene 13 gelagert ist, die mit der rückwärtigen Wand 14 des Gehäuses 4 befestigt ist. Mit der Bezugsziffer 15 ist eine vor der Querstrebe 12 des Sitzlängsverstellers angeordnete Querstrebe für den Sitzhöhenversteller des Sitzes, die den Bauraum für das Behältnis 3 vorgibt, bezeichnet.

Figur 3 veranschaulicht das aufrecht stehende Gehäuse 4, allerdings bei nach vorne ausgeklapptem Staufach 5, womit Gegenstände in das Behältnis 3 eingelegt bzw. aus diesem entnommen werden können.

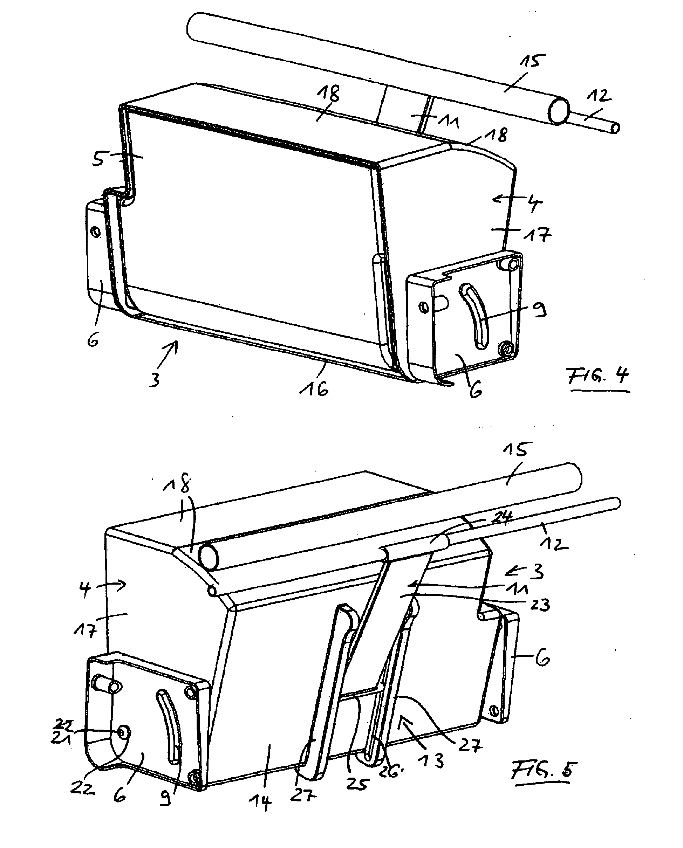

Die Figuren 4 bis 6 veranschaulichen in einer räumlichen Ansicht den Aufbau und die Anordnung des Behältnisses sowie dessen Lagerung und Anbindung an die Querstrebe 12. So weist das Gehäuse 5 eine untere Wand 16, eine rückwärtige Wand 14, zwei Seitenwände 17 und eine obere Wand 18 auf, ist demzufolge nach vorne offen. Die Seitenwände 17 sind mit den Führungsstiften 10 versehen, die in die Führungsnuten 9 der Trägerplatten 6 eingreifen. Das Staufach 5 weist eine vordere Wand 19 und zwei Seitenwände 20 auf. Bei geschlossenem Behältnis 3 ist das Staufach 5 in das Gehäuse 4 eingesetzt, konzentrisch zur Achse 7 mit der jeweiligen Seitenwand 20 des Staufachs 5 mittels Zapfen 21 verbunden, der ein Loch mit kreisförmigem Querschnitt im Gehäuse 4 sowie ein entsprechendes Loch 22 in der Trägerplatte 6 durchsetzt. Hierdurch sind sowohl das Gehäuse 4 als auch das Staufach 5 um die gemeinsame stationäre Achse 7 schwenkbar gelagert.

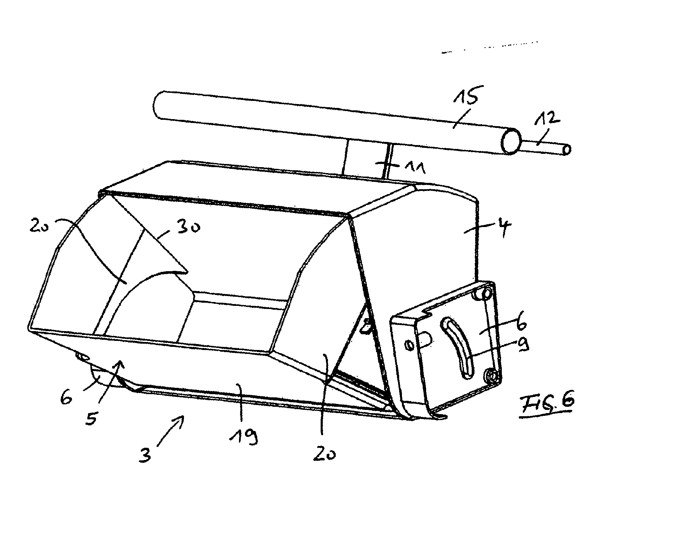

Mit der rückwärtigen Wand 14 ist die Führungsschiene 13 zur Aufnahme des Verbindungshebels 11 verbunden. Dieser weist einen plattenförmigen Abschnitt 23 und in dessen Endbereichen, quer zur Längserstreckung des plattenförmigen Abschnitts 23, zylindrische Lagerabschnitte 24 und 25 auf. Der obere zylindrische Lagerabschnitt 24 ist hohlzylindrisch ausgebildet und wird von der Querstrebe 12 durchsetzt, während der untere zylindrische Lagerabschnitt 25 als Stift ausgebildet ist, dessen beide Stiftenden in hinterschnittene Führungsabschnitte von zwei parallel zueinander angeordneten Schienenteilen 27 der Führungsschiene 13 eingreifen. Wie insbesondere der Darstellung der Figur 5 zu entnehmen ist, ist bei aufrechter Stellung des Behältnisses 3 und teilweise zurückgeschobener Stellung des Sitzrahmenteils 1 gemäß Figur 2 der Verbindungshebel 11 geringfügig schräg zur vertikalen geneigt, und zwar, ausgehend vom unteren zylindrischen Lagerabschnitt 25, schräg nach hinten gerichtet zum oberen zylindrischen Lagerabschnitt 24. In dieser Stellung befindet sich der untere zylindrische Lagerabschnitt 25 in etwa auf der halben Schienenlänge der Führungsschiene 13. Figur 6 veranschaulicht das aufrecht stehende Gehäuse 4 bei geöffnetem Staufach 5.

Demgegenüber befindet sich der Stift 25 in der vollständig zurückgeschobenen Stellung des Sitzrahmenteils 1 gemäß Figur 1 in der oberen Endposition der Führungsschiene 13.

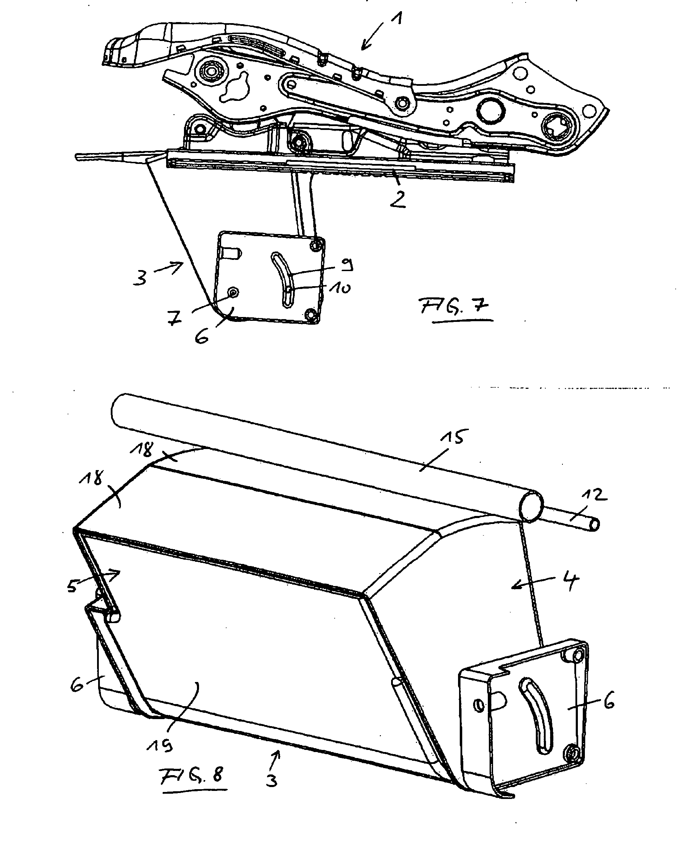

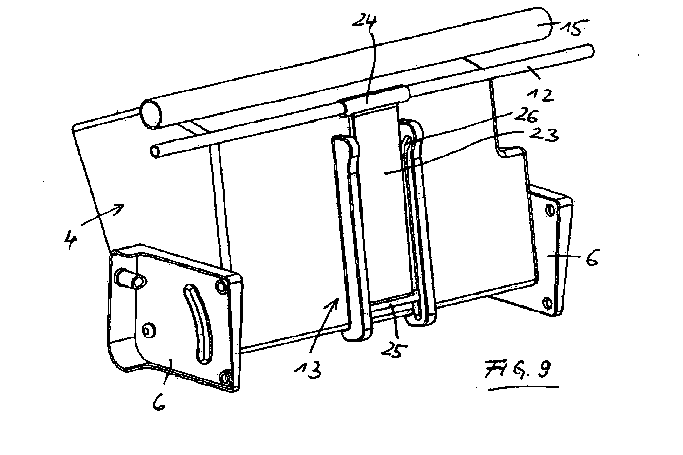

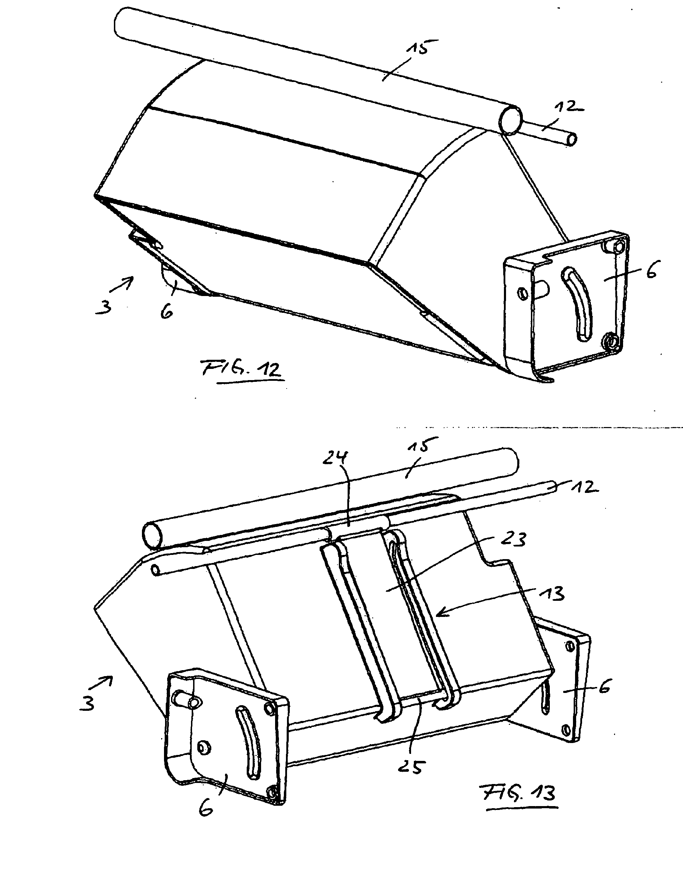

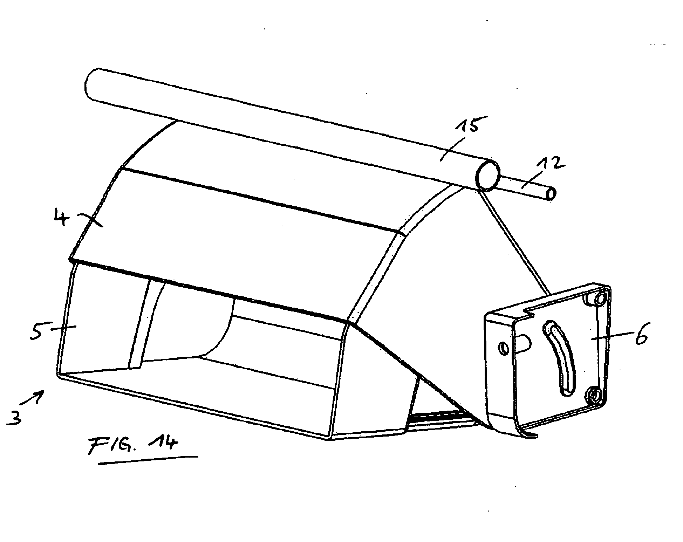

Beim Überführen des Sitzrahmenteils 1 von der hintersten Stellung gemäß Figur 1 in die in den Figuren 2 bis 6 veranschaulichte erste Zwischenstellung verbleibt das Behältnis 3 in der aufrechten Position, da es in diesen Positionen des Sitzrahmenteils 1 von vorne gut zugänglich ist. Beim Überführen des Sitzrahmenteils 1 aus der ersten Zwischenstellung in die in den Figuren 7 bis 9 gezeigte zweite Zwischenstellung, in der das Sitzrahmenteil 1 weiter vorne angeordnet ist, wird der Verbindungshebel 11 weiter bezüglich der Führungsschiene 13 nach unten verschoben, wobei bei Erreichen der zweiten Zwischenstellung der plattenförmige Abschnitt 23 in eine flächige Anlage mit der rückwärtigen Wand 14 des Gehäuses 4 gelangt. Dies ist insbesondere der Darstellung der Figur 9 zu entnehmen. Bei einem weiteren Verfahren des Sitzrahmenteils 1 nach vorne drückt der flächig anliegende Verbindungshebel 11 auf die rückwärtige Wand 14 des Gehäuses 4, womit dieses nach vorne um die Achse 7 kippt. Die vollständig nach vorne gekippte Stellung des Behältnisses 3, die somit der vordersten Stellung des Sitzrahmenteils 1 entspricht, ist in den Figuren 10 bis 14 veranschaulicht. Die Wirkungsweise ergibt sich dabei aus der allgemeinen Beschreibung gemäß der Figuren 1 bis 6. Insbesondere der Darstellung der Figuren 10 bis 14 ist zu entnehmen, dass bei nach vorne gekipptem Behältnis 3 ausreichend Platz zum Öffnen des Staufachs 5 verbleibt und überdies dieses Staufach von vorne für den Fahrzeuginsassen 31 gut zugänglich ist.

Beim Zurückfahren des Sitzrahmenteils 1 erfolgt das Zurückschwenken des Behältnisses 3, konkret das Zurückschwenken des Gehäuses 4, durch den auf das Gehäuse 4 einwirkenden Verbindungshebel 11, bevorzugt bei Einwirkung einer Federkraft, die das Bestreben hat, das Gehäuse 4 in die aufrechte Position zu drücken. Die Rückbewegung unter Federkraft ist nicht zwingend, die Feder bzw. Federn unterstützen vorteilhaft die Rückbewegung. Hierzu sind die Federn im Bereich der Achse 7 angeordnet und es greift die jeweilige Feder mit einem Ende an der Trägerplatte 6 und mit dem anderen Ende an der Seitenwand 17 des Gehäuses 4 an. Weitere Federn können das Staufach 5 im Sinne einer Einschwenkbewegung in die Endlage des Staufachs 5 im Gehäuse 4 beaufschlagen und gleichfalls als Spiralfedern im Bereich der Achse 7 angeordnet sein.

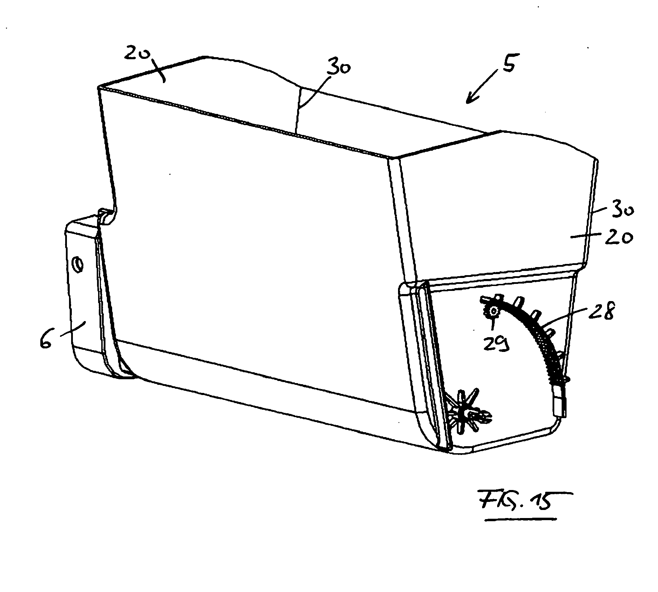

Die Figur 15 zeigt das Staufach 5 in vergrößerter Darstellung und dessen Führung bezüglich des Gehäuses 4. Konzentrisch zur Drehachse 7/Zapfen 21 ist im Bereich beider Seitenwände 20 des Staufachs 5 eine Zahnradführung 28 an der Außenseite dieser Seitenwände angeordnet. Mit dem Zahnradsegment dieser Zahnradführung 28 kämmt ein Zahnrad 29, das drehbar in der zugewandten Seitenwandung 17 des Gehäuses 4 gelagert ist. Hierdurch ergibt sich, ungeachtet der Lagerung des Staufachs 5 um die Achse 7, eine verkippungsfreie Führung des Staufachs 5 relativ zum Gehäuse 4. Bei geschlossenem Behältnis 3 liegt das Staufach 5 mit der rückwärtigen Kante 30 der jeweiligen Seitenwand 20 an der rückwärtigen Wand 14 des Gehäuses 4 an. Begrenzt wird die maximal ausgeschwenkte Stellung des Staufachs 5 aus dem Gehäuse 4 durch die Anlage der hinteren oberen Kanten 37 der Seitenwände 20 des Staufachs 5 an der oberen Wand 18 des Gehäuses 4.

Bei geschlossenem Behältnis 3 kann ein Verschluss zwischen Gehäuse 4 und Staufach 5 vorgesehen sein, der beispielsweise als Push-Push-Verschluss ausgebildet ist.

### Bezugszeichenliste

| | |
|---|---|
| Sitzrahmenteil | 1 |
| Längsschiene | 2 |
| Behältnis | 3 |
| Gehäuse | 4 |
| Staufach | 5 |
| Trägerplatte | 6 |
| Achse | 7 |
| Befestigungspunkt | 8 |
| Führungsnut | 9 |
| Führungsstift | 10 |
| Verbindungshebel | 11 |
| Querstrebe | 12 |
| Führungsschiene | 13 |
| rückwärtige Wand | 14 |
| Querstrebe | 15 |
| untere Wand | 16 |
| Seitenwand | 17 |
| obere Wand | 18 |
| vordere Wand | 19 |
| Seitenwand | 20 |
| Zapfen | 21 |
| Loch | 22 |
| plattenförmiger Abschnitt | 23 |
| zylindrischer Lagerabschnitt | 24 |
| zylindrischer Lagerabschnitt | 25 |
| Führungsabschnitt | 26 |
| Schienenteil | 27 |
| Zahnradführung | 28 |
| Zahnrad | 29 |
| | |
| Kante | 30 |
| | |
| Fahrzeuginsasse | 31 |
| Oberschenkel | 32 |
| Gesäß | 33 |
| Sitzträger | 34 |
| Bodenplatte | 35 |
| Längsschiene | 36 |
| Kante | 37 |

## Patentansprüche

1. Kraftfahrzeug, insbesondere Personenkraftwagen, mit einem in Längsschienen (2, 36) verfahrbaren Fahrzeugsitz (1), wobei dieser Sitz (1) in Sitzträgern (34) gelagert ist, die mit dem Fahrzeugboden (35) verbunden sind, **dadurch gekennzeichnet, daß** die Sitzträger auch mit einem im vorderen Bereich des Sitzes (1) angeordneten Behältnis (3) zur Aufnahme von Gegenständen verbunden sind, wobei das Behältnis (3) in den Sitzträgern (34) um eine quer zur Längserstreckung der Längsschienen (2, 36) angeordnete Achse (7) schwenkbar gelagert ist und Mittel (11) zum Schwenken des Behältnisses (3) vorgesehen sind, wobei die Mittel (11) am Behältnis (3) und am Sitz (1) angreifen.

2. Kraftfahrzeug nach Anspruch 1, wobei der Sitz ein Sitzrahmenteil (1) aufweist und die Mittel (11) am Behältnis (3) und am Sitzrahmenteil (1), insbesondere einer Querstrebe (12) des Sitzrahmenteils (1) angreifen.

3. Kraftfahrzeug nach Anspruch 1 oder 2, wobei das Behältnis (3) unterhalb des Sitzes (1), insbesondere einem Vordersitz des Personenkraftwagens angeordnet ist.

4. Kraftfahrzeug nach einem der Ansprüche 1 bis 3, wobei das Behältnis (3) ein Staufach (5) und ein Gehäuse (4) zum Verschließen des Staufachs (5) aufweist.

5. Kraftfahrzeug nach einem der Ansprüche 1 bis 4, wobei das Staufach (5) und das Gehäuse (4) um dieselbe Achse (7) schwenkbar in den Sitzträgern (34), insbesondere in Trägerplatten (6) der Sitzträger (34) gelagert sind.

6. Kraftfahrzeug nach einem der Ansprüche 1 bis 5, wobei Mittel vorgesehen sind, die die Schwenkbewegung des Staufachs (5) und/oder des Gehäuses (4) relativ zu den Sitzträgern (34) begrenzen.

7. Kraftfahrzeug nach Anspruch 6, wobei die Mittel zum Begrenzen der Schwenkbewegung als sich über den maximalen Schwenkwinkel erstreckende Bogenführungen (9) und als mit dieser zusammenwirkende Komplementärteile (10) ausgebildet sind.

8. Kraftfahrzeug nach einem der Ansprüche 1 bis 7, wobei Federmittel zum Überführen des Staufachs (5) in dessen vom Gehäuse (4) geschlossene Stellung und/oder zum Überführen des Behältnisses (3) in Richtung dessen Ausgangsstellung bei vollständig zurückgefahrenem Sitz (1) vorgesehen sind.

9. Kraftfahrzeug nach einem der Ansprüche 1 bis 8, wobei die Mittel zum Schwenken des Behältnisses (3), die am Behältnis (3) und am Sitz (1) angreifen, einen Verbindungshebel (11) aufweisen, der mit einem Ende schwenkbar im Sitz (1) und dem anderen Ende schwenkbar im Behältnis (3), insbesondere schwenkbar im Gehäuse (4) des Behältnisses (3) gelagert ist.

10. Kraftfahrzeug nach Anspruch 9, wobei der Verbindungshebel (11) mit einem Ende schwenkbar in einer Querstrebe (12) des Sitzes (1), um eine quer zur Längserstreckung der Längsschienen (2, 36) angeordnete Achse gelagert ist und mit dem anderen Ende schwenkbar und verschiebbar in einer, bezogen auf die Verfahrrichtung des Sitzes (1), rückwärtigen Führung (13) des Behältnisses (3) gelagert ist.

11. Kraftfahrzeug nach Anspruch 10, wobei beim Verschieben des Sitzes (1) nach vorne der Verbindungshebel (11), in Abstand von seinem behältnisseitigen Lagerende (25), in Kontakt mit dem Behältnis (3), insbesondere mit dem Gehäuse (4) bringbar ist.

12. Kraftfahrzeug nach einem der Ansprüche 1 bis 11, wobei das Behältnis (3) in der hinteren Position des Sitzes (1) aufrecht stehend und in der vordersten Position des Sitzes (1) nach vorne gekippt angeordnet ist.

## Claims

1. A motor vehicle, especially a passenger car, comprising a car seat (1) movable in longitudinal rails (2, 36), with said seat (1) being held in seat supports (34) which are connected with a vehicle floor (35), **characterized in that** the seat supports are also connected with a container arranged in the front region of the seat (1) for accommodating objects, with the container (3) being held in the seat supports (34) to be pivotable about an axis (7) arranged transversally to the longitudinal direction of the longitudinal rails (2, 36) and means (11) are provided for pivoting the container (3), with the means (11) acting upon the container (3) and the seat (1).

2. A motor vehicle according to claim 1, wherein the seat comprises a seat frame part (1) and the means (11) act upon the container (3) and the seat frame part (1), especially a cross member (12) of the seat frame part (1).

3. A motor vehicle according to claim 1 or 2, wherein the container (3) is arranged beneath the seat (1), especially a front seat of the passenger car.

4. A motor vehicle according to one of the claims 1 to 3, wherein the container (3) comprises a storage compartment (5) and a housing (4) for sealing the storage compartment (5).

5. A motor vehicle according to one of the claims 1 to 4, wherein the storage compartment (5) and the housing (4) are held to be pivotable about the same axis (7) in the seat supports (34), especially in support plates (6) of the seat supports (34).

6. A motor vehicle according to one of the claims 1 to 5, wherein means are provided which limit the pivoting movement of the storage compartment (5) and/or the housing (4) relative to the seat supports (34).

7. A motor vehicle according to claim 6, wherein the means for limiting the pivoting movement are arranged as curved guides (9) extending over the maximum pivot angle and as complementary parts (10) cooperating with the same.

8. A motor vehicle according to one of the claims 1 to 7, wherein the spring means are provided for transferring the storage compartment (5) in its position closed by the housing (4) and/or for transferring the container (3) in the direction of its initial position when the seat (1) has been fully retracted.

9. A motor vehicle according to one of the claims 1 to 8, wherein the means for pivoting the container (3) which act upon the container (3) and the seat (1) comprise a connecting lever (11) which is held with one end in a pivotable manner in the seat (1) and with the other end in a pivotable manner in the container (3), especially in a pivotable manner in the housing (4) of the container (3).

10. A motor vehicle according to claim 9, wherein the connecting lever (11) is held with one end in a pivotable manner in a cross member (12) of the seat (1) about an axis arranged transversally to the longitudinal extension of the longitudinal rails (2, 36) and is held with the other end in a pivotable and displaceable manner in guide (13) of the container (3) which is at the rear relating to the direction of displacement of the seat (1).

11. A motor vehicle according to claim 10, wherein the connecting lever (11), when the seat (1) is displaced forwardly, can be brought into contact with the container (3), especially with the housing (4), at a distance from its bearing end (25) on the side of the container.

12. A motor vehicle according to one of the claims 1 to 11, wherein the container (3) is arranged upright in the rear position of the seat (1) and tilted in a forward direction in the foremost position of the seat (1).

## Revendications

1. Véhicule automobile, en particulier voiture particulière, avec un siège mobile (1) dans des rails longitudinaux (2, 36), ledit siège (1) étant monté dans des supports (34), qui sont reliés au sol du véhicule (35), **caractérisé en ce**ci que lesdits supports sont également reliés avec un contenant (3) disposé vers l'avant du siège (1) pour recevoir des objets, ledit contenant (3), monté dans les supports (34) du siège, pouvant pivoter autour d'un axe (7) disposé transversalement à l'allongement longitudinal desdits rails longitudinaux (2, 36), et que des moyens (11) permettant le pivotement dudit contenant (3) sont prévus, lesdits moyens (11) ayant prise sur ledit contenant (3) et sur ledit siège (1).

2. Véhicule automobile selon la revendication 1, ledit siège présentant un cadre (1) et lesdits moyens (11) ayant prise sur ledit contenant (3) et sur ledit cadre du siège (1), en particulier sur une entretoise transversale (12) dudit cadre du siège (1).

3. Véhicule automobile selon la revendication 1 ou 2, ledit contenant (3) étant disposé sous ledit siège (1), en particulier un siège avant de la voiture particulière.

4. Véhicule automobile selon une des revendications 1 à 3, ledit contenant (3) présentant un coffret de rangement (5) et un boîtier (4) pour fermer ledit coffret de rangement (5).

5. Véhicule automobile selon une des revendications 1 à 4, ledit coffret de rangement (5) et ledit boîtier (4) étant montés pivotant autour du même axe (7) dans lesdits supports du siège (34), en particulier dans des plaques support (6) desdits supports de siège (34).

6. Véhicule automobile selon une des revendications 1 à 5, des moyens étant prévus, qui limitent le mouvement de pivotement dudit coffret de rangement (5) et/ou dudit boîtier (4) par rapport auxdits supports du siège (34).

7. Véhicule automobile selon la revendication 6, des moyens de limitation mouvement de pivotement étant constitués comme des coudes articulés (9) s'étendant au-delà de l'angle de pivotement maximum et comme des pièces complémentaires (10) agissant en synergie avec ledit mouvement.

8. Véhicule automobile selon une des revendications 1 à 7, des moyens élastiques étant prévus pour faire passer ledit coffret de rangement (5) dans la position dans laquelle il est fermé par ledit boîtier (4) et/ou pour faire passer ledit contenant (3) en direction de la position de départ lorsque ledit siège (1) est placé complètement vers l'arrière.

9. Véhicule automobile selon une des revendications 1 à 8, les moyens prévus pour faire pivoter ledit contenant (3), qui ont prise sur ledit contenant (3) et sur ledit siège (1), présentent un levier de liaison (11), qui est monté à une de ses extrémités de manière pivotante dans ledit siège (1) et à l'autre extrémité de manière pivotante dans ledit contenant (3), en particulier pivotant dans ledit boîtier (4) dudit contenant (3).

10. Véhicule automobile selon la revendication 9, ledit levier de liaison (11) étant monté avec une extrémité dans une entretoise transversale (12) dudit siège (1) de manière pivotante autour d'un axe transversal à l'allongement longitudinal desdits rails longitudinaux (2, 36) et étant monté par son autre extrémité pivotant et mobile par glissement dans un guidage (13) dudit contenant (3) placé en arrière par rapport à la direction de déplacement dudit siège (1).

11. Véhicule automobile selon la revendication 10, ledit levier de liaison (11) pouvant être amené en contact avec ledit contenant (3), en particulier avec ledit boîtier (4), lors du déplacement dudit siège (1) vers l'avant, à distance de l'extrémité de sa course du côté contenant (25).

12. Véhicule automobile selon une des revendications 1 à 11, ledit contenant (3) étant disposé debout verticalement dans la position la plus postérieure dudit siège (1) et basculé vers l'avant dans la position la plus antérieure dudit siège (1).
